## Europäisches Patentamt

## European Patent Office

## Office européen des brevets

(19)

(11) Veröffentlichungsnummer: **0 124 824 B1**

(12)

# EUROPÄISCHE PATENTSCHRIFT

(45) Veröffentlichungstag der Patentschrift:
**30.03.88**

(21) Anmeldenummer: **84104604.8**

(22) Anmeldetag: **24.04.84**

(51) Int. Cl.⁴: **B 25 J 5/00**, F 22 B 37/00

(54) Positioniereinrichtung zur fernbedienbaren Inspektion, Reinigung und Reparatur der parallelen Rohre eines Rohrbündels.

(30) Priorität: **10.05.83 DE 3317099**

(43) Veröffentlichungstag der Anmeldung:
**14.11.84 Patentblatt 84/46**

(45) Bekanntmachung des Hinweises auf die Patenterteilung:
**30.03.88 Patentblatt 88/13**

(84) Benannte Vertragsstaaten:
**CH DE FR LI NL SE**

(56) Entgegenhaltungen:
**EP - A - 0 066 791**
**GB - A - 2 093 796**

(73) Patentinhaber: **Siemens Aktiengesellschaft Berlin und München, Wittelsbacherplatz 2, D-8000 München 2 (DE)**

(72) Erfinder: **Richter, Bernd, Dipl.-Ing., Oppelner Strasse 5, D-8520 Erlangen (DE)**
Erfinder: **Bauer, Rainer, Fasanenweg 23a, D-8522 Herzogenaurach (DE)**

ACTORUM AG

## Beschreibung

Die Erfindung betrifft eine Positioniereinrichtung zur fernbedienbaren Inspektion, Reinigung und Reparatur der parallelen Rohre eines Rohrbündels, insbesondere eines Dampferzeugers für Kernkraftwerke, mit einer an dem freien Ende eines Schwenkarms befestigten Führung für Messgeräte, Werkzeuge oder dergleichen und mit einem zweiten Schwenkarm, der den ersten Schwenkarm an dessen der Führung abgekehrten Ende trägt, wobei die Schwenkachsen der beiden Schwenkarme parallel zu den Achsen der Rohre verlaufen.

Eine solche Vorrichtung ist in der FR-A-1 473 139, Fig. 7 dargestellt. Die Schwenkarme sind dabei in Form von grossflächigen Platten ausgebildet, deren Schwenkachsen durch zwei mit Abstand voneinander angeordnete Angeln an der oberen und unteren Seite der vertikal orientierten Schwenkarme definiert sind. Die aufwendige Konstruktion ergibt sich offenbar daraus, dass mit der bekannten Positioniereinrichtung ein Reinigungsgerät mit einer umfangreichen Führungsschiene verstellt werden soll, so dass sehr grosse Kräfte zu übertragen sind. Deshalb sind beim Bekannten auch besondere Füsse vorgesehen, die die Führungsschiene in bezug auf den das Rohrbündel abschliessenden Rohrboden abstützen und zentrieren. Die bekannte Konstruktion ist damit zwar als mechanisch fest anzusehen, jedoch ist die Verstellung der Positioniereinrichtung und das Anfahren anderer Rohre entsprechend mühsam.

Aus der GB-A-2 093 796 ist ein Manipulator bekannt, bei dem das dem ersten Schwenkarm abgekehrte Lager des zweiten Schwenkarms in einem Justiergerät vorgesehen ist, das zwei Gelenke zur kardanischen Verstellung der Achse des Lagers aufweist. Dieser bekannte Manipulator hat eine Vielzahl von Abstützungen und Verstellmöglichkeiten, die mit einem entsprechenden Zeitaufwand zur Erfassung aller Rohre eines Rohrbündels angepasst werden müssen. Während nämlich die auf die Rohre aufzurichtenden Werkzeuge von dem letztlich parallel zum Rohrboden sich erstreckenden kurzen ersten Schwenkarm gehalten werden, erfolgt die gesamte Verstellung zum Ansteuern von anderen Rohrpositionen, die durch eine Schwenkbewegung des kurzen Schwenkarms erfasst werden können, durch Verstellung des zweiten Schwenkarms. Dieser zweite Schwenkarm ist in seiner Länge teleskopartig veränderbar, in seiner Neigung verstellbar und ausserdem um eine Achse schwenkbar, die in einem Justiergerät (Drehtisch) liegt, so dass sie parallel zu den Rohren des Rohrbündels ausgerichtet werden kann. Das Justiergerät ist aber mit Hilfe einer Kugel und zweier Spreizarme abgestützt, so dass auch dabei ein komplizierter Aufbau gegeben ist, der aufwendige Einstellarbeiten im Inneren des Dampferzeugers, wie das Einbringen und Positionieren der Kugel und deren Herausnehmen am Ende der Arbeiten, erforderlich macht. Ferner wird beim bekannten Manipulator zunächst nur der Teleskoparm auf ein Rohr des Rohrbodens ausgerichtet und dort verankert. Erst dann kann mit dem ersten kurzen Schwenkarm das Werkzeug zu solchen Rohren gebracht werden, die auf einem Radius zu dem vom Teleskoparm angefahrenen Rohr liegen. Das Anfahren eines Rohres mit dem Teleskoparm erfordert also zunächst das Ausrichten des Justiergerätes in bezug auf den Rohrboden. Danach muss der Teleskoparm in seiner Neigung, in seiner Länge und in seiner Winkellage bezüglich seiner Drehachse im Justiergerät eingestellt werden. Bei der Verstellung der Neigung des Teleskoparms muss auch die Schwenkachse des kurzen Schwenkarms verstellt werden, um seine Parallelität zum Rohrboden beibehalten zu können.

Bei den bekannten Ausführungen ist also ein erheblicher Zeitaufwand für eine richtige Positionierung der Messgeräte, Werkzeuge und dergleichen auf die Rohre des Rohrbündels erforderlich.

Deshalb sucht die Erfindung nach einer besseren Möglichkeit, mit der die Positioniereinrichtung schneller auf die Rohre des Rohrbündels ausgerichtet werden kann.

Erfindungsgemäss ist vorgesehen, dass das dem ersten Schwenkarm abgekehrte Lager des zweiten Schwenkarms in einem Justiergerät vorgesehen ist, das zwei Gelenke zur kardanischen Verstellung der Achse des Lagers aufweist, dass das Justiergerät als Wagen auf einer gegenüber dem Rohrbündel ortsfest verankerten Schiene sitzt und dass in den ersten Schwenkarm ein Zentriersystem integriert ist, das auf das Justiergerät einwirkt, um die Parallelität der Schwenkachse mit den Rohrachsen einzustellen.

Bei der Erfindung wird mit dem Justiergerät die Ausrichtung der Schwenkarme auf die Rohre durch eine einmalige Verstellung so genau vorgenommen, dass keine weitere Abstützung an den Rohren selbst erforderlich ist. Der Schwenkarm kann mit seinem den Rohrenden zugekehrten freien Ende vielmehr frei geführt werden, wobei die Führung immer auf die Achse der Rohre ausgerichtet bleibt. Damit ist sichergestellt, dass die für Inspektionen, Reinigung und Reparatur verwendeten Messgeräte und Werkzeuge, aber zum Beispiel auch Verschlussstopfen, mit der erforderlichen Genauigkeit in die Rohre gelangen.

Mit dem Zentriersystem, das optisch oder auch mechanisch arbeitet, zum Beispiel mit Bildverarbeitungssensoren oder einer Fernsehkamera mit Fadenkreuz oder mit zugespitzten Zentrierdornen, wird die einmalige Ausrichtung des Justiergerätes durch Fernbedienung sichergestellt. Diese Ausrichtung bezieht sich insbesondere auf das Fluchten der Schwenkachse des Lagers des zweiten Schwenkarms mit der Achse eines der Rohre und auf die sogenannte Nullpunktsberechnung, d.h. die Bestimmung der Istposition der Drehachse des zweiten Schwenkarmes im Rahmen der Rohrteilung des Rohrbündels.

Die Anordnung des Justiergerätes als Wagen auf einer gegenüber dem Rohrbündel ortsfest verankerten Schiene, wirkt sich besonders günstig aus, wenn die Prüfstelle selbst, zum Beispiel

durch Radioaktivität, gefährdet ist, so dass der Einsatz von Personal mindestens durch besondere Vorsichtsmassnahmen eingeschränkt ist. Die Schiene kann dabei einen bewegbaren, zum Beispiel schwenkbaren Abschnitt aufweisen, dessen Länge mindestens so gross wie die Länge des Wagens ist. Anstelle eines schwenkbaren Abschnittes kann aber auch ein weiterer Schienenteil verwendet werden, auf der ein Hilfswagen mit einem kurzen Schienenstück als Träger für den Wagen angeordnet ist. Mit dem Hilfswagen wird dann der Wagen in die Höhe der Schiene gebracht.

Das Justiergerät kann vorteilhaft mit Abstand von dem Ende des Rohrbündels angeordnet sein, weil dann die Schwenkarme in dem Zwischenraum zwischen dem Justiergerät und dem Rohrbündel frei bewegbar sind. Dabei können die Schwenkarme gegenüber dem Ende des Rohrbündels geneigt sein, um einen gewissen Abstand zu überbrücken. Wesentlich ist jedoch, dass die Schwenkarme im Gegensatz zu der bekannten Positioniereinrichtung aneinander vorbeifahren können, um beliebige Positionen auf schnellstem Wege ansteuern zu können.

Das Justiergerät kann auch an der Aussenseite einer dem Ende des Rohrbündels gegenüberliegenden Wand befestigt sein und mit einem Kragträger durch eine Öffnung der Wand ragen, an dessen freien Ende das Lager des zweiten Schwenkarmes liegt. Diese Anbringung an der Aussenseite des Dampferzeugers verringert die Montagezeit und damit auch die Strahlenbelastung in Kernkraftwerken. Dabei kann das Einführen der Schwenkarme durch die Öffnung noch dadurch erleichtert werden, dass die Neigung der Schwenkarme verstellbar ist.

Besonders günstig ist es, wenn der Abstand zwischen der Schwenkachse und der Achse der Führung des einen Schwenkarms ebenso lang wie der Abstand zwischen den beiden Schwenkachsen des anderen Schwenkarmes ist. Bei dieser «gleichen Länge» der Schwenkarme kann jeder Punkt innerhalb eines Radius angefahren werden, der gleich der doppelten Länge eines Schwenkarmes ist, während sich beim bekannten Justiergerät die Schwenkarme bei der gleichzeitigen Bewegung behindern können.

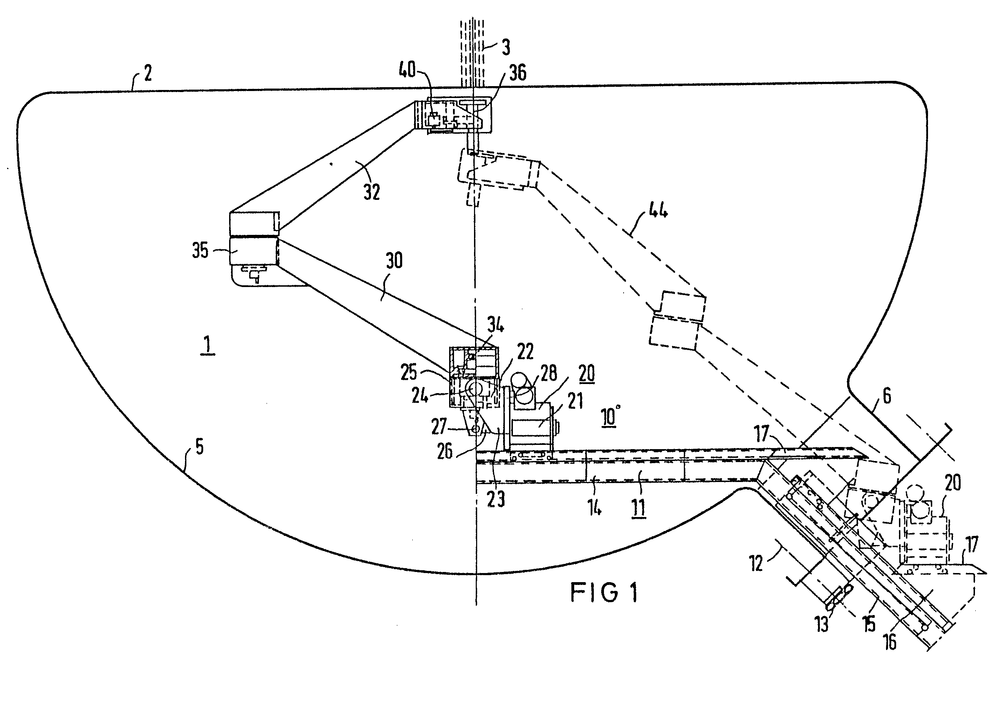

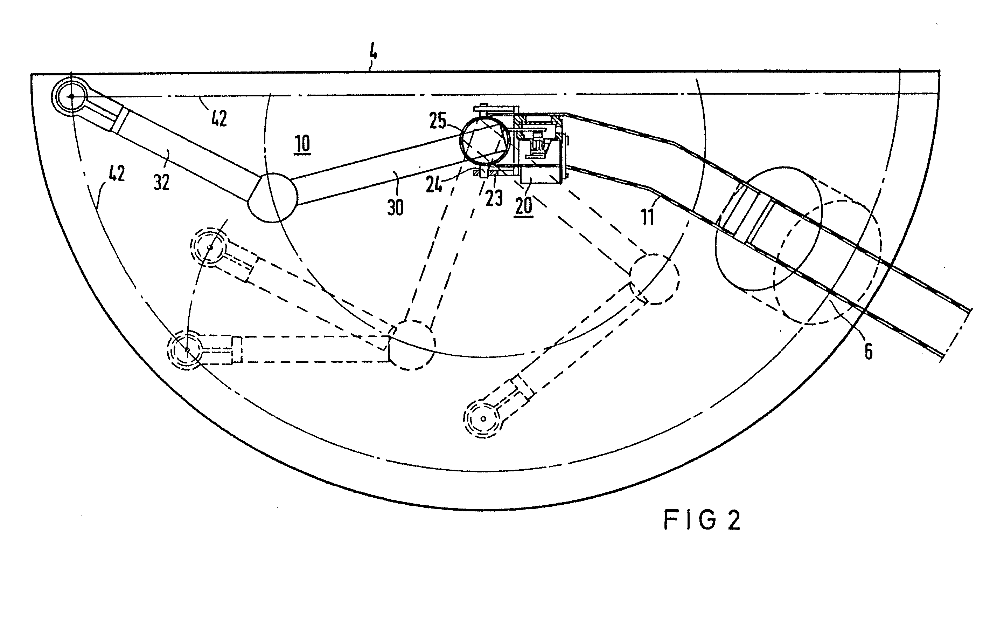

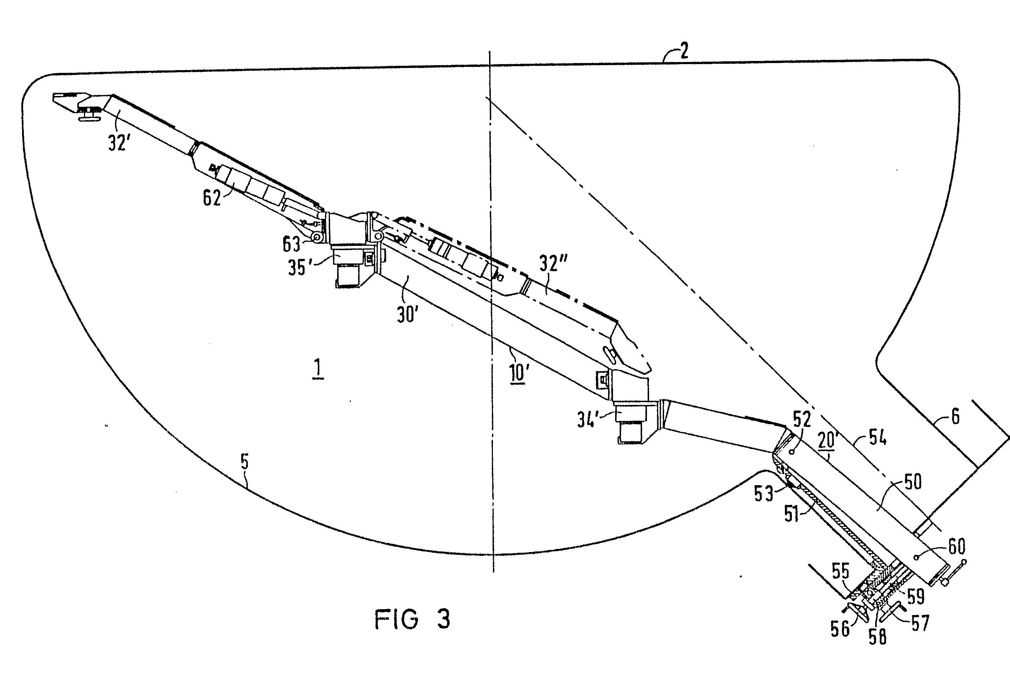

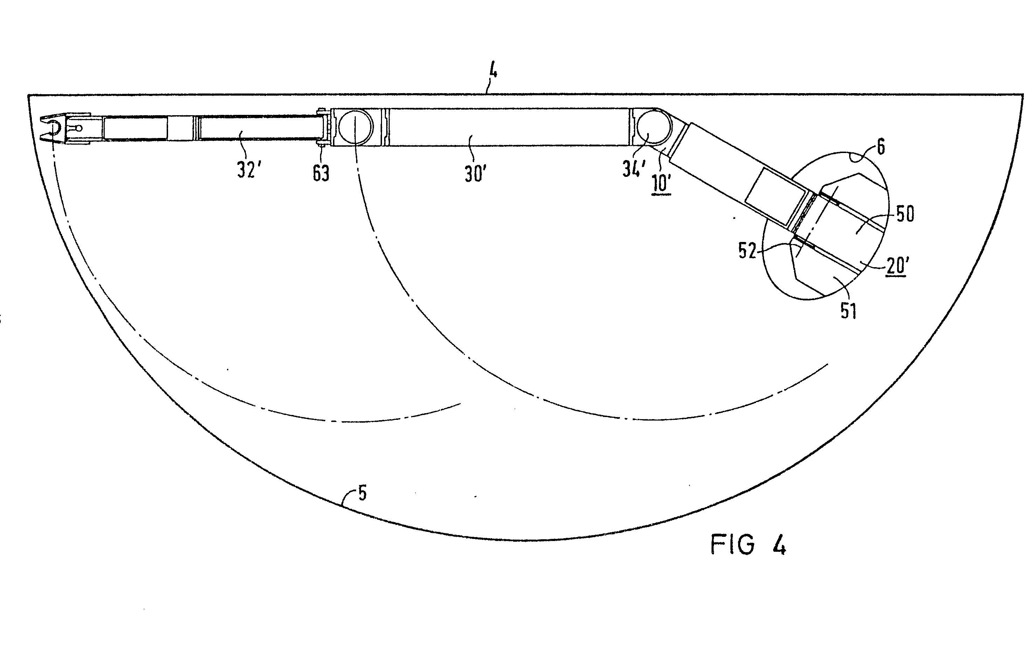

Zur näheren Erläuterung der Erfindung werden anhand der beiliegenden Zeichnung zwei Ausführungsbeispiele beschrieben, die in Fig. 1 und 3 jeweils in einem Vertikalschnitt und in Fig. 2 und 4 in einem Horizontalschnitt dargestellt sind. Dabei ist der Übersichtlichkeit halber ein U-Rohr-Dampferzeuger für Druckwasserreaktoren, bei dem die Positioniereinrichtung nach der Erfindung eingesetzt wird, nur durch seinen Hohlraum für das Primärwasser angedeutet.

Die Primärkammer 1 des Dampferzeugers ist an ihrer Oberseite durch einen Rohrboden 2 begrenzt, von dem die Rohre 3 eines Rohrbündels ausgehen. Das Rohrbündel ist zum Beispiel aus 4000 U-Rohren zusammengesetzt, deren geradlinige Schenkel parallel zueinander vertikal verlaufen und zu beiden Seiten der in Fig. 2 sichtbaren Trennwand 4 in den Rohrboden 2 münden. Die untere Begrenzung der Primärkammer 1 ist durch einen Kugelboden 5 gegeben. Darin ist ein Zugang über ein Mannloch 6 vorgesehen, so dass eine Positioniereinrichtung eingebracht werden kann, die als Ganzes mit 10 bezeichnet ist.

Zum Einbringen der Positioniereinrichtung 10 dient eine Schiene 11, die an Bohrungen 12 des das Mannloch 6 begrenzenden Stutzens angeschraubt wird, wie bei 13 dargestellt ist. Die Schiene 11 besteht aus zwei einen Winkel miteinander einschliessenden geradlinigen Abschnitten 14 und 15. Auf dem nach aussen führenden Abschnitt 15 ist ein Hilfswagen 16 verstellbar, der mit einem kurzen Schienenstück 17 ein Justiergerät 20 in den Bereich des horizontal liegenden Schienenabschnittes 14 fahren kann, so dass das Justiergerät 20 als Wagen darauf definiert verstellbar ist.

Das Justiergerät 20 besitzt ein Schwenklager 21 mit einer parallel zur Schiene 14 verlaufenden horizontalen Schwenkachse, um die ein Lagerträger 22 verstellbar ist. Der Lagerträger 22 hat in seinen gabelförmigen Armen 23 ein weiteres Schwenklager 24 mit einer in der Fig. 1 ebenfalls horizontalen Achse, die rechtwinklig zur Achse des Schwenklagers 21, also quer zur Schiene 14 verläuft. Damit ist ein sogenannter Drehtisch 25 schwenkbar angeordnet. Die Verstellung des Drehtisches 25 erfolgt mit einer Schubstange 26, die bei 27 an einem Arm des Drehtisches angreift. Der Lagerträger 22 wird dagegen mit einem nicht weiter dargestellten Zapfen verstellt, der in eine Scheibe 28 des Lagerträgers ragt und mit Hilfe eines Exzenters um zum Beispiel 5 mm nach beiden Seiten bewegbar ist. Dies genügt, um bei dem Abstand des Zapfens von der Achse des Schwenklagers 21 Schwenkwinkel von 5° zu erreichen. Die Verstellung des Drehtisches 25 umfasst Schwenkbewegungen von 29°. Mithin ist in dem durch die beiden Schwenkwinkel definierten Bereich eine kardanische Verstellung möglich.

Das Justiergerät 20 gestattet es, die in dem Drehtisch 25 liegende Schwenkachse von zwei Schwenkarmen 30, 32 genau auf die Achse der Rohre 3 auszurichten. Die Ausrichtung gilt für das Fluchten der Achsen wie für die Einnahme einer Nullpunktsposition, bei der die Achse des zweiten, «ortsfesten» Schwenkarmes 30 genau mit der Achse eines der Rohre 3 zusammenfällt.

Die Schwenkarme 30, 32 sind gleich lang, d.h. der Abstand des «ortsfesten» Schwenklagers 34 des zweiten Armes 30 von dem Schwenklager 35, mit dem der dem Rohrboden 2 zugekehrte erste Arm 32 befestigt ist, ist genauso gross wie der Abstand zwischen dem Schwenklager 35 und der Achse einer Führung 36, die an dem freien Ende des ersten Schwenkarmes zum Befestigen von Prüf-, Reinigungs- oder Reparaturgeräten vorgesehen ist, die in die Rohre 3 eingefahren werden sollen.

In Fig. 1 erkennt man noch einen optischen Impulsgeber 40. Er gehört zu einem nicht weiter dargestellten Zentriersystem, mit dem das Fluchten der Führung 36 und damit auch der parallelen Schwenkachsen 34 und 35 mit den Achsen der Rohre 3 eingestellt und überprüft wird.

In Fig. 2 ist zu sehen, dass die Schwenkarme 30, 32 alle Positionen von Rohren 3 anfahren können, die in den Innenraum 1 münden, wobei die äusseren Grenzen des Rohrfeldes durch die strichpunktierten Linien 42 umrissen sind. Deshalb braucht die neue Positioniereinrichtung 10 nur einmal durch das Mannloch 6 mit Hilfe der Schiene 11 eingebracht zu werden. Dann erfolgt auf der Schiene 11 die Ausrichtung des für die Bewegung der Schwenkarme 30, 32 massgebenden ortsfesten Lagers 34 mit Hilfe des Justiergerätes 20. Diese Einstellung wird ebenfalls durch Fernbedienung anhand der Werte des optischen Impulsgebers 40 vorgenommen. Mithin kann mit der neuen Positioniereinrichtung 10 allein durch Fernbedienung jedes Rohr 3 des Rohrbündels angesteuert werden.

Die Arme 30, 32 sind beim Ausführungsbeispiel gleichmässig um 40° gegenüber der Horizontalen geneigt, so dass sie beim Einbringen in die Primärkammer die bei 44 gestrichelt gezeichnete Strecklage einnehmen, während sie im Betrieb den Abstand zwischen dem Justiergerät 20 und dem Rohrboden überbrücken. Es können aber auch andere Neigungswinkel gewählt werden, solange sich die Arme 30, 32 bei ihren Schwenkbewegungen wechselseitig passieren können.

Bei der in den Fig. 3 und 4 als weiteres Ausführungsbeispiel dargestellten Positioniereinrichtung 10' umfasst das Justiergerät 20' einen Kragträger 50, der in einem im Querschnitt etwa U-förmigen Lagerkörper 51 mit einer horizontalen Achse 52 schwenkbar gelagert ist. Der Lagerkörper 50 stützt sich mit einer Rolle 53 an der Innenwand des Mannloches 6 ab und ist in einem rechtwinklig zur Achse 54 des Mannlochs 6 verlaufenden Flansch 55 an der Aussenseite des Mannlochstutzens befestigt.

Am Flansch 55 sind zur Verstellung des Kragträgers 50 des Justiergeräts 20' zwei Handräder 56 und 57 angebracht. Das Handrad 56 verstellt nach Art einer Wandermutter den als Spindel wirkenden Dorn 58 einer Gabel 59, die über das äussere Ende des Kragträgers 58 greift und dort mit einer Achse 60 befestigt ist. Damit wird der Kragträger 50 in einer in der Darstellung der Fig. 3 vertikalen Ebene um die Achse 52 geschwenkt.

Mit dem Handrad 57 wird der Lagerkörper 51 längs der Innenwand des Mannlochs 6 verschoben, so dass der Kragträger 50 um die Achse 54 des Mannlochs wandert. Diese Achse 54 verläuft rechtwinklig zur Schwenkachse 52. Deshalb ist, obwohl sich die Achsen 52, 54 nicht direkt kreuzen, eine kardanische Verstellung des Lagers 34' des Schwenkarms 30' möglich, mit der der andere Schwenkarm 32' genau auf die Rohre im Rohrboden 2 ausgerichtet werden kann.

Beim Ausführungsbeispiel nach den Fig. 3 und 4 sind die Schwenkarme 30' und 32' in der dargestellten Strecklage gleichmässig um etwa 40° gegenüber dem das Ende des Rohrbündels bildenden Rohrboden 2 geneigt. Die Neigung des Schwenkarms 32' kann jedoch durch eine gelenkige Anbringung am Schwenklager 35' verändert werden. Dabei wird der Schwenkarm 32' mit einem Stellantrieb 62 um den Drehpunkt 63 in eine zum Schwenkarm 30' parallele Lage gebracht, wie bei 32'' in Fig. 3 gestrichelt dargestellt ist. Man erhält damit eine für den Transport und Einbau besonders vorteilhafte kompakte Form der Positioniereinrichtung 10.

Die beim Justiergerät 20' vorgesehenen Handräder 56, 57 können auch durch elektrische, pneumatische oder hydraulische Stellantriebe ersetzt werden, wenn man die Strahlenbelastung des Bedienungspersonals beim Ausrichten der Positioniereinrichtung 10' weiter verringern will.

**Patentansprüche**

1. Positioniereinrichtung (10) zur fernbedienbaren Inspektion, Reinigung und Reparatur der parallelen Rohre (3) eines Rohrbündels, insbesondere eines Dampferzeugers für Kernkraftwerke, mit einer an dem freien Ende eines Schwenkarms (32) befestigten Führung (36) für Messgeräte, Werkzeuge oder dergleichen und mit einem zweiten Schwenkarm (30), der den ersten Schwenkarm (32) an dessen der Führung (36) abgekehrten Ende trägt, wobei die Schwenkachsen (34, 35) der beiden Schwenkarme (30, 32) parallel zu den Achsen der Rohre (3) verlaufen, dadurch gekennzeichnet, dass das dem ersten Schwenkarm (32) abgekehrte Lager (34) des zweiten Schwenkarms (30) in einem Justiergerät (20) vorgesehen ist, das zwei Gelenke (21, 24) zur kardanischen Verstellung der Achse des Lagers (34) aufweist, dass das Justiergerät (20) als Wagen auf einer gegenüber dem Rohrbündel ortsfest verankerten Schiene (11) sitzt und dass in den ersten Schwenkarm (32) ein Zentriersystem (40) integriert ist, das auf das Justiergerät (20) einwirkt, um die Parallelität der Schwenkachsen (34, 35) mit den Rohrachsen einzustellen.

2. Positioniereinrichtung nach Anspruch 1, dadurch gekennzeichnet, dass das Justiergerät (20) mit Abstand von dem Ende des Rohrbündels angeordnet ist.

3. Positioniereinrichtung nach Anspruch 2, dadurch gekennzeichnet, dass das Justiergerät (20) an der Aussenseite einer dem Ende des Rohrbündels gegenüberliegenden Wand (5) befestigt ist und mit einem Kragträger (50) durch eine Öffnung (6) der Wand (5) ragt, an dessen freiem Ende das Lager (34) des zweiten Schwenkarms (30) liegt.

4. Positioniereinrichtung nach Anspruch 2 oder 3, dadurch gekennzeichnet, dass die Schwenkarme (30, 32) gegenüber dem Ende des Rohrbündels geneigt sind.

5. Positioniereinrichtung nach Anspruch 4, dadurch gekennzeichnet, dass die Neigung verstellbar ist.

6. Positioniereinrichtung nach einem der Ansprüche 1 bis 5, dadurch gekennzeichnet, dass der Abstand zwischen der Schwenkachse (35) und der Achse der Führung (36) des einen Schwenkarms (32) ebenso lang wie der Abstand zwischen den beiden Schwenkachsen (34, 35) des anderen Schwenkarms (30) ist.

7. Positioniereinrichtung nach Anspruch 1 oder 2, dadurch gekennzeichnet, dass die Schiene (11) einen bewegbaren Abschnitt (17) aufweist, dessen Länge mindestens so gross wie die Länge des Wagens ist.

8. Positioniereinrichtung nach einem der Ansprüche 1 bis 7, dadurch gekennzeichnet, dass das Zentriersystem (40) das Fluchten der Schwenkachse des Lagers (34) des zweiten Schwenkarms (30) mit der Achse eines der Rohre (3) optisch und/oder mechanisch kontrolliert.

## Claims

1. A positioning device (10) for remote-controllable inspection, cleaning and repair of the parallel pipes (3) of a pipe assembly, in particular a steam generator for nuclear power stations, comprising a guide (36), attached to the free end of a swivel arm (32), for measuring devices, tools or the like, and comprising a second swivel arm (30) which bears the first swivel arm (32) at its end remote from the guide (36), where the swivel axes (34, 35) of the two swivel arms (30, 32) extend parallel to the axes of the pipes (3), characterised in that the bearing (34) of the second swivel arm (30) remote from the first swivel arm (32) is located in an adjusting device (20) which comprises two joints (21, 24) for the cardanic adjustment of the axis of the bearing (34), that the adjusting device (20) is arranged in the form of a carriage on a rail (11) secured so as to be stationary in relation to the pipe assembly, and that a centering system (40) is integrated into the first swivel arm (32) and acts upon the adjusting device (20) in order to adjust the parallelism of the swivel axes (34, 35) to the pipe axes.

2. A positioning device as claimed in Claim 1, characterised in that the adjusting device (20) is arranged at a distance from the end of the pipe assembly.

3. A positioning device as claimed in Claim 2, characterised in that the adjusting device (20) is secured to the outside of a wall (5) which is arranged opposite the end of the pipe assembly, and projects through an opening (6) in the wall (5) with a cantilever beam (50) at whose free end the bearing (34) of the second swivel arm (30) is located.

4. A positioning device as claimed in Claim 2 or 3, characterised in that the swivel arms (30, 32) are inclined in relation to the end of the pipe assembly.

5. A positioning device as claimed in Claim 4, characterised in that the inclination is adjustable.

6. A positioning device as claimed in one of the Claims 1 to 5, characterised in that the distance between the swivel axis (35) and the axis of the guide (36) of the first swivel arm (32) is equal to the distance between the two swivel axes (34, 35) of the other swivel arm (30).

7. A positioning device as claimed in Claim 1 or 2, characterised in that the rail (11) comprises a mobile section (17), whose length is at least equal to the length of the carriage.

8. A positioning device as claimed in one of the Claims 1 to 7, characterised in that the centring system (40) optically and/or mechanically monitors the alignment of the pivot axis of the bearing (34) of the second swivel arm (30) with the axis of one of the pipes (3).

## Revendications

1. Dispositif de mise en position (10) pour l'inspection, le nettoyage et la réparation télécommandés des tubes (3) parallèles d'un faisceau de tubes, notamment d'un générateur de vapeur de centrale nucléaire, comprenant un dispositif de guidage (36) d'appareils de mesure, d'outils ou analogues, fixé à l'extrémité libre d'un bras orientable (32) et un second bras orientable (30) qui porte le premier bras orientable (32) par l'extrémité de celui-ci qui est éloignée du dispositif de guidage (36), les axes de rotation (34, 35) des deux bras orientables (30, 32), s'étendant parallèlement aux axes des tubes (3), caractérisé en ce que le palier (34) du second bras orientable (30), qui est éloigné du premier bras orientable (32) est prévu dans un appareil de réglage (20) comprenant deux articulations (21, 24) pour le réglage par un montage à la cardan de l'axe du palier (34), en ce que l'appareil de réglage (20) repose comme un chariot sur un rail (11) encré à poste fixe par rapport au faisceau de tubes et en ce qu'au premier bras orientable (32) est incorporé un système de centrage (40) qui agit sur l'appareil de réglage (20) pour régler le parallélisme des axes de rotation (34, 35) et des axes des tubes.

2. Dispositif de mise en position suivant la revendication 1, caractérisé en ce que l'appareil de réglage (20) est disposé à distance de l'extrémité du faisceau de tubes.

3. Dispositif de mise en position suivant la revendication 2, caractérisé en ce que l'appareil de réglage (20) est fixé sur le côté extérieur d'une paroi (5) faisant face à l'extrémité du faisceau de tubes, et pénètre, dans une ouverture (6) de la paroi (5) par une barre en porte-à-faux, à l'extrémité libre de laquelle se trouve le palier (34) du second bras orientable (30).

4. Dispositif de mise en position suivant la revendication 2 ou 3, caractérisé en ce que les bras orientables (30, 32) sont inclinés par rapport à l'extrémité du faisceau de tubes.

5. Dispositif de mise en position suivant la revendication 4, caractérisé en ce que l'inclinaison est réglable.

6. Dispositif de mise en position suivant l'une des revendications 1 à 5, caractérisé en ce que la distance entre l'axe de rotation et l'axe du dispositif de guidage (36) de l'un des bras orientables (32), est égale à la distance entre les deux axes de rotation (34, 35) de l'autre bras orientable (30).

7. Dispositif de mise en position suivant la revendication 1 ou 2, caractérisé en ce que le rail (11) comporte un tronçon (17) mobile dont la longueur est au moins aussi grande que la longueur du chariot.

8. Dispositif de mise en position suivant l'une des revendications 1 à 7, caractérisé en ce que le système de centrage (40) contrôle, optiquement et/ou mécaniquement, l'alignement de l'axe de rotation orientable du palier (34) du second bras oscillant (30) avec l'axe de l'un des tubes (3).

FIG 1

0 124 824

FIG 2

0 124 824

FIG 3

0 124 824

FIG 4